Europäisches Patentamt

(19) European Patent Office

Office européen des brevets

(11) Publication number: **0 005 899**

A1

(12) **EUROPEAN PATENT APPLICATION**

(21) Application number: **79300637.0**

(22) Date of filing: **18.04.79**

(51) Int. Cl.²: **B 29 H 17/02**
**B 29 H 17/00**

(30) Priority: **26.05.78 US 909750**

(43) Date of publication of application:
**12.12.79 Bulletin 79/25**

(84) Designated Contracting States:
**FR GB IT**

(71) Applicant: **Caterpillar Tractor Co.**
**100 N. E. Adams Street**
**Peoria, Illinois 61629(US)**

(72) Inventor: **Grawey, Charles Edward**
**210 East Orchard Place**
**Peoria Illinois 61603(US)**

(74) Representative: **Jackson, Peter Arthur et al,**
**GILL JENNINGS & EVERY 53 to 64, Chancery Lane**
**London WC2A 1HN(GB)**

(54) **Method and apparatus for making a tyre and tyre so produced.**

㋗ A method of making a tyre, wherein a partially cured support element (12) of alastomeric material is provided on a soluble annular core (14) prior to final curing. The support element (12) is built up on the annular core (14) prior to being partially cured by exposure to a beam of electron radiation.

In one example, apparatus for carrying out the method comprises a frame (20) with means (18) for supporting and rotating the soluble annular core (14). Means (22,24) are provided for wrapping a strip of elastomeric material helically about the rotating core. At least one electron generating device (44) is also provided to direct the beam of electron radiation onto the wrapped elastomeric material.

Fig.1.

EP 0 005 899 A1

- 1 -

CATERPILLAR TRACTOR CO.                    GJE 5279/050

METHOD OF AND APPARATUS
FOR MAKING A TYRE.

The invention relates to a method of making a tyre, and particularly to a partial precuring process useful for producing more effectively a tyre of sound construction.

Heretofore, tyres have been made by vacuum forming or wrapping relatively thin sheets or strips of uncured elastomeric material or rubber over an annular core of soluble material. For example, U.S. Patent Specification No.3,864,188 describes a tyre wrapping apparatus useful for helically wrapping flexible rubber strips and filament material in progressive layers on a core. After the various layers are built up to the desired degree, the uncured annular structure is placed in a heated mould under pressurized conditions. Subsequently, steam or other hot and pressurized fluid is passed into the internal region of the core to aid in curing thereof, and to dissolve the core as is described, for example, in U.S Patent Specification No. 3, 969, 050.

While the aforementioned tyre processing methods have proved generally successful, the uncured elastomeric material tends to flow in the mould causing undesirable areas of reduced thickness or non-uniformity. This problem is particularly severe in the laterally spaced shoulder areas at either side of the tread portion of the tyre. This can result in the rejection of the tyre upon conducting a quality inspection, and a waste of material and time.

In the past, electron beam precuring of a tyre carcass ply of cord reinforced elastomeric material has been considered. Such precuring is described, for example, in U.S. Patent Specification No. 3, 901, 751. However, in that case, the carcass plies were separately precured prior to their placement on an inner liner of elastomeric material on a tyre building drum for the purpose of avoiding wrinkling of the plies during a so-called "one-stage" tyre building or shaping operation. This is disadvantageous in that the plies and electron beam generating apparatus must be controllably moved relative to one another in a separate apparatus requiring appreciably more handling of the plies than is desired. Moreover, in placing the partially cured plies on the tyre building drum there is a problem of properly aligning the various uncured and partially cured regions thereof. Still further, the partially cured plies are stiffer and more difficult to handle and to deform to the various contour changes of the underlying support elements in place on the core or drum.

In accordance with the present invention, in a method of making a tyre wherein a partially cured support element of elastomeric material is provided on a soluble annular core prior to final curing, the support element is built up on the annular core prior to

- 3 -

being partially cured by exposure to a beam of electron radiation.

Thus part of the support element is rigidified on the annular core and this substantially prevents flow of the elastomeric material during final curing in a mould. The problem of wrapping partially cured plies around the annular core is also avoided. Also, this method has the advantage of insitu build up of the elastomeric material without the placement and positioning problems of the previously known,conventional radial expansion methods.

Preferably the annular core with the support element and the beam of electron radiation are rotated relatively to one another about the axis of the cure so that the beam causes partial curing of an annular band of the support element.

The use of a second beam of electron radiation enables the partial curing of a second annular band of the support element. The two bands are then usefully provided at the shoulder portions of the assembly i.e. those portions extending generally radially inwardly of each edge of the tread. This strengthens the shoulder portions and provides additional dimensional control during build up of the tyre.

The invention is particularly useful in the manufacture of tube tyres, in which case the support element may be built up on the annular core by wrapping helically a strip of elastomeric material around the core.

An apparatus for making such a tube tyre comprises, in accordance with another aspect of the invention, a frame with means for supporting and rotating a soluble annular core, means for wrapping a strip of elastomeric material helically about the rotating core, and at least one electron generating device which directs a beam of electron radiation onto the wrapped elastomeric material.

An example of a method of making a tyre in accordance with the present invention and an apparatus for use in such a method will now be described with reference to the accompanying drawings, in which:-

Figure 1 is a diagrammatic, side elevation;

Figure 2 is a diagrammatic and enlarged section taken on the line II-II in Figure 1; and,

Figure 3 is an enlarged section of a portion of the tyre carcass of Figure 2, and also illustrates the degree of electron beam radiation treatment across the tyre wall.

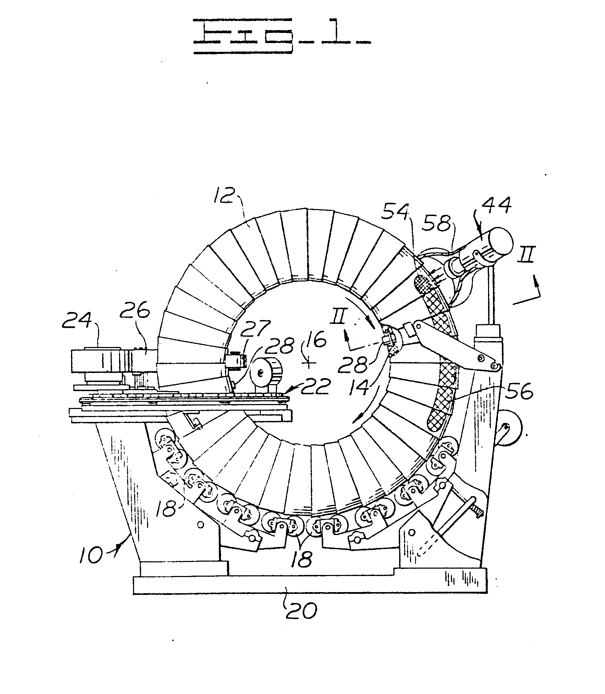

As shown in Figure 1, an exemplary tyre wrapping and support apparatus 10 supports a partially built tyre carcass or support element 12 of elastomeric material on a soluble annular core 14. The core is of generally doughnut-shaped configuration having a central axis 16, and is preferably constructed of moulded porous sand cemented by a suitable binder. The core and the elastomeric support element are supported on the apparatus by a plurality of rollers 18 mounted on a base or frame 20. With this construction one or more of the rollers 18 may be selectively driven to rotate the tyre carcass 12 about the central axis 16.

Annular guide means 22 are movably mounted on the frame 20 of the apparatus 10 for rotation about the cross-section of the core 14. The guide means 22 includes a removable portion, not shown, to allow initial positioning of the core 14 within the guide means prior to accomplishing a plurality of material wrapping steps, and to permit subsequent removal of the substantially completed tyre carcass from the apparatus 10. A rotatable, cylindrical spool 24 having an elongate, flat strip of uncured elastomeric or rubber material 26 is positioned on the guide means 22 so that as the core 14 is controllably rotated about the axis 16, in a clockwise direction when viewing Figure 1, at the desired speed by the rollers 18, the guide means 22 rotates around the core and the strip of elastomeric material is helically wrapped in an overlapping manner about the core. A soft or deformable pressure roller 27 is mounted on the guide means 22 for pressing the strip 26 against the core 14 and for squeezing out air bubbles trapped between the overlapping portions of the strip. Valve fittings 28 are provided in corresponding depressions in the inside peripheral portion of the core, and the wrapping operation may be halted when the fittings are approached, for hand fitting or cutting the strip of elastomeric material closely to encircle the fittings. Upon completion of winding the strip about the core, as illustrated in Figure 1, the strip 26 is cut so that the subsequent processing steps of the tyre's construction can be completed. The aforementioned apparatus and method is known in the art, and is described in U.S.Patent Specification No.3,864,188.

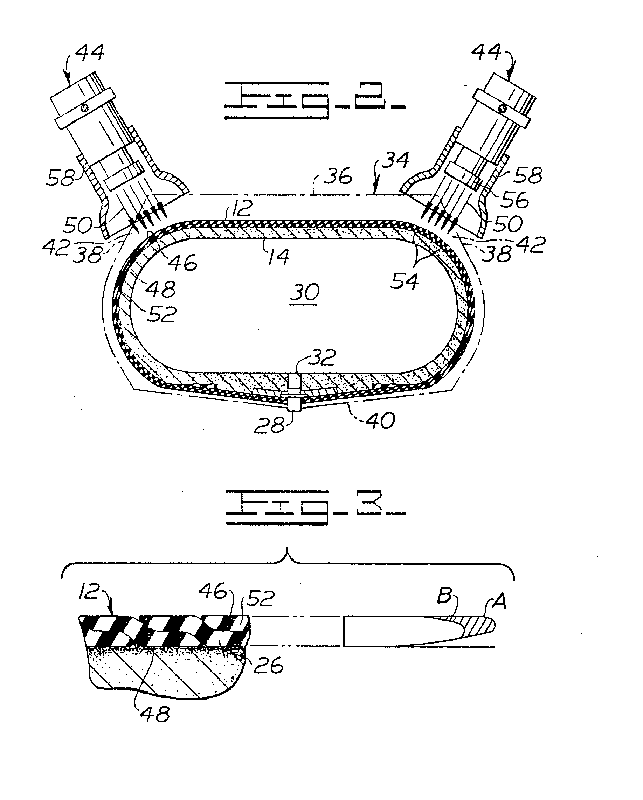

Referring to Figure 2 it is to be noted that the disintegratable core 14 is hollow to define an internal chamber 30, and that a passage 32 extends through the core in radial alignment with each of the valve fittings 28. Moreover, it is to be appreciated that in this example the elastomeric support element 12 is a first layer of uncured tube stock, which will be subsequently encased by additional layers of uncured elastomeric bond stock material , wound reinforcement filaments, mats or the like, not shown, to define an intermediate tyre structure 34 as indicated by the phantom cross-sectional outline circumscribing the first layer. This intermediate tyre structure has an outer tread portion 36, a pair of facing curved side walls 38 and an inner base portion 40, with the side walls being connected to the tread portion at opposite shoulder portions 42.

The intermediate tyre structure 34 has heretofore been placed in a separate mould or curing apparatus, not shown, of the type fully described in U.S. Patent Specification No. 3,969,050. The problem with that process is that the elastomeric material undesirably flows too much in the annular regions of the shoulder portions 42 during initial curing. Specifically, when the internal chamber 30 is supplied with pressurized steam through one of the valve fittings 28, the intermediate tyre structure 34 is urged outwardly into conformance with the contoured wall surfaces of the encasing mould. While the base portion 40 is relatively thick and stiff, the shoulder portions 42 are thinner and more flexible and experience a greater proportion of the distortion. Furthermore, the peripheral spacing between the loops of the usually helically wrapped reinforcement filament is greater at the outside than the inside contributing to this difficulty.

In order to overcome the problems, at least one and preferably two electron beam generating devices 44 are provided, as shown in Figures 1 and 2, to partially cure the partially built tyre carcass 12, while it is

- 7 -

supported on the core 14, in a localized manner and to a value less than a full cure prior to any final curing operation in a mould.   Such beam generating devices are, for example, produced by High Voltage Engineering Corp. of Burlington, Massachusetts.   The generating devices 44 may be mounted on the frame 20 of the tyre wrapping apparatus 10 so that they can be angularly oriented in a desirable manner relative to the respective shoulder portions 42.   Specifically, it is preferred that the generating devices be disposed normally to an external shoulder surface 46 and an internal shoulder surface 48 of each of the shoulder portions of the support element 12 as illustrated in Figures 1 and 2.   Desirably, such treatment is accomplished in this tyre wrapping apparatus, by revolving the support element 12 and the core 14 about the axis 16 at a constant angular velocity by driving one or more of the supporting rollers 18 and simultaneously actuating the electron beam generating devices to focus a beam of electron radiation 50 on preselected regions thereof.   Particularly, the beam instantaneously penetrates from the external surface 46 into a central body region 52 of the support element 12 at a preselected treatment zone 54.   With such relative movement two continually lengthening, arcuate bands 56 of partially cured elastomeric material are formed immediately behind the treatment zones as is schematically indicated in Figure 1 by the shaded area.   It is contemplated that the electron beam treatment would normally continue for one full revolution.

As indicated in the dimensionally exaggerated drawing of Figure 3, the support element 12 includes two overlapping portions of the uncured strip 26 having a cross-section of about 2.5 to 5 mm (0.1" to 0.2") total thickness.   These overlapping portions are treated with electron radiation from the generating devices 44 at a preselected dosage level consistent with such thickness and the particular compound recipe of the elastomeric material. For example, the nature of the usual electron beam generating devices is such as to treat the external surface 46 facing the stream of electrons with about 50 to 80% of the maximum dosage experienced within the central region 52 of the support element 12 as is illustrated by the dosage level line A in the graphic presentation projected to the right of the support element. Further, it is preferable to cure the underside of the layer adjacent the internal surface 48 to a minimal amount in order to avoid waste of energy and the possibility of overcuring of the remainder of the layer. However, the 80% dosage level at the external surface is undesirable, at least in part, from the standpoint that the exterior surface becomes less receptive to adhering to the subsequent layer of elastomeric material and/or to the subsequent layer of filaments, not shown. In other words, it can be less tacky or harder than desired. Accordingly, the parameters of the electron beam 50 are modified to minimize external surface curing by providing a dosage level at the external surface 46 less than about 60% of the maximum dosage level experienced at the central region as is representatively illustrated by the dosage level line B in the graphic presentation. This can be accomplished by modifying the voltage level of the generating devices 44 to a high value sufficient for providing a relatively substantial plurality of high voltage electrons for proportionally greater penetration into the elastomeric support element 12. Optionally, an auxiliary filter 56 can be utilized intermediate the beam generating device and the layer to filter out or to eliminate the weaker electrons of the type that serve to excite and cure the exterior surface region, and to pass the stronger electrons that serve to cure the internal region.

Thus, the amount and/or type of dosage level of the beam of electron radiation 50 from the generating devices 44 is limited to minimize or reduce external surface curing. Moreover, the maximum amount of precure of the elastomeric support element 12 is limited to a preselected value less that that of a fully cured elastomeric material. The degree of curing is normally measured with a rheometer and the preselected value may lie, for example, within a range of from 50 to 80% of the final rheometer curing reading of the substantially fully built tyre after it is removed from the mould.

Although the embodiment of Figures 1,2 and 3 relates to electron beam radiation treatment of a single overlapping layer of the support element 12, it is also possible to partially cure two or more such elastomeric layers at the same time; for example, four thicknesses or more of the strip 26. Alternatively, after partially curing the support element 12, a second substantially similar layer of elastomeric material, not shown, can be applied by the wrapping apparatus 10, and thereafter a portion of the second layer can be separately partially cured.

While the elastomeric support element 12 of the instant example is overlapping or helically wrapped on the core 14 by the method described in U.S. Patent Specification No.3,864,188, it is to be appreciated that the method of partially curing an elastomeric support whilst it is on a core can be equally applied to one or more elastomeric support element layers provided on a similar core by the vacuum or sheet forming technique as described for example, in U.S.Patent

0005899

- 10 -

Specification No. 4.044,085.  In either case, preferably only one of the support element 12 and the electron beam generating device 44 is caused to rotate about the central axis 16 at a preselected rate with respect to the other sufficient for curing a band 56 of the elastomeric material to a preselected value less than a full cure.  A separate operating station or apparatus would be desirable, however, for rotating the vacuum formed core and support element. Although not shown it can be of generally similar construction to the apparatus 10, but without the wrapping means 22,24,27.

Furthermore, suitable protection for operating personnel should be provided.  For example, one or more shields 58 can be releasably secured to the tyre wrapping apparatus 10 as shown in Figures 1 and 2 for containment of the beam 50 and for general operational safety.  Alternatively, the entire apparatus 10 can be placed in a shielded enclosure, not shown, to prevent inadvertent contact of the beam with personnel or with the surrounding machinery.

- 11 -

CLAIMS

1.    A method of making a tyre, wherein a partially cured support element (12) of elastomeric material is provided on a soluble annular core (14) prior to final curing characterised in that the support element is built up on the annular core prior to being partially cured by exposure to a beam of electron radiation (50).

2.    A method according to claim 1, characterised in that the annular core with the support element and the beam of electron radiation (50) are rotated relatively to one another about the axis of the core so that the beam causes partial curing of an annular band (56) of the support element (12).

3.    A method according to claim 2, characterised in that a second annular band (56) of the support element (12) is partially cured by a second beam of electron radiation (50).

4.    A method according to claim 2 or claim 3, characterised in that the or each band (56) substantially maintains its position relative to the core during final curing and during subsequent dissolving of the soluble core (14).

5.    A method according to any one of claims 1 to 4, characterised in that the dosage level of the beam of electron radiation (50) at the surface (46) of the support element (12) exposed to the beam is less than

0005899

- 13 -

60% of a maximum dosage level achieved internally of the support element.

6. A method according to claim 5, characterised in that electrons with a voltage below a selected level are filtered out of the beam of electron radiation (50).

7. A method of making a tube tyre according to any of the preceding claims, characterised in that the support element (12) is built up on the annular core (14) by wrapping helically a strip of elastomeric material around the core.

8. A tyre which has been made by a method according to any one of the preceding claims.

9. Apparatus for carrying out the method according to claim 7, the apparatus comprising a frame (20) with means (18) for supporting and rotating a soluble, annular core (14), means (22, 24) for wrapping a strip of elastomeric material helically about the rotating core, and at least one electron generating device (44) which directs a beam of electron radiation (50) onto the wrapped elastomeric material.

0005899

1/2

FIG_1

0005899

2/2

44                                             44

Fig-2.

58              36    34              58
                                     56
50                                   50
42 38                                38 42
46          12                       54
48          14
52          30
            32
28              40

Fig-3.

12        46 52              B    A
                       26
48

0005899

européen Patent Office

EUROPEAN SEARCH REPORT

Application number

EP 79 30 0637

## DOCUMENTS CONSIDERED TO BE RELEVANT

| Category | Citation of document with indication, where appropriate, of relevant passages | Relevant to claim |
|---|---|---|
| | <u>US - A - 3 933 566</u> (T.K. SEIBER-LING)<br><br>* Column 2, line 55 - column 4, line 22; column 5, line 59 - column 6, line 69 *<br><br>-- | 1,5 |
| A | <u>US - A - 3 959 053</u> (G. FISK) | |
| A | <u>US - A - 3 933 553</u> (T. SEIBER-LING) | |
| A | <u>FR - A - 2 213 159</u> (T. SEIBER-LING) | |
| A | <u>FR - A - 2 154 597</u> (FIRESTONE) | |
| A | <u>FR - A - 2 224 286</u> (GOODYEAR) | |
| | <u>FR - A - 2 324 456</u> (FIRESTONE)<br><br>---- | |

### CLASSIFICATION OF THE APPLICATION (Int. Cl.²)

B 29 H 17/02
B 29 H 17/00

### TECHNICAL FIELDS SEARCHED (Int.Cl.²)

B 29 H 17/02
B 29 H 17/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 30-08-1979 | SCHMITT |

EPO Form 1503.1  06.78